Europäisches Patentamt

European Patent Office

Office européen des brevets

(11) Publication number: **0 316 866**
**A2**

# EUROPEAN PATENT APPLICATION

(21) Application number: 88119021.9

(51) Int. Cl.⁴: **G11B 7/09 , G02B 27/16**

(22) Date of filing: **15.11.88**

(30) Priority: **17.11.87 JP 289775/87**

(43) Date of publication of application:
**24.05.89 Bulletin 89/21**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

Applicant: **TOSHIBA INTELLIGENT**
**TECHNOLOGY LTD.**
**70, Yanagi-cho Saiwai-ku**
**Kawasaki-shi Kanagawa-ken(JP)**

(72) Inventor: **Ishika, Sou**
**Toshiba Intelligent Technology Ltd.**
**Tsurumaki-Ryo**
**1-15-6, Tsurumaki Setagaya-ku Toky(JP)**

(74) Representative: **Henkel, Feiler, Hänzel &**
**Partner**
**Möhlstrasse 37**
**D-8000 München 80(DE)**

(54) **Apparatus for detecting a focusing state of optical system.**

(57) An incident light beam from a recording medium
(1) is split into substantially parallel light beams by
two parallel plates (18, 19), and the split light beams
radiate the detection regions of a detector. The two
parallel plates (18, 19) are arranged in different directions to define the same angle with the optical
axis of the light beam. When the light beam incident
on the detecting regions (20A ~ 20I) is electrically
processed, at least a focal point of the light beam
focused on the recording medium (1) is controlled.
Two birefringent members (28, 29) can be used in
place of the two parallel plates. In this case, the
optic axes of the respective birefringent members
(28, 29) are inclined in different directions to define
the same angle with the optical axis of the light
beam.

FIG. 1

## Apparatus for detecting a focusing state of optical system

The present invention relates to an apparatus for detecting a focusing state of an optical system and, more particularly, to an apparatus for focusing a light beam on an optical memory for recording/reading information on/from the optical memory.

Recently, image information recording/reproduction apparatuses such as an optical disk system have been developed for recording image information, e.g., a document, retrieving the image information as required, and reproducing the image information as a hard or soft copy. In an optical disk system of this type, a focused light beam is radiated on a disk-type optical memory, i.e., an optical disk to record or reproduce information. More specifically, in the recording mode, upon radiation of the light beam, the state of the recording surface is changed, and information is recorded in the form of, e.g., a pit on the optical disk. In the reproduction mode, a steady-state beam is radiated on the optical memory. The intensity of the light beam is modulated in the pit in accordance with the recorded information, and the intensity modulation of the light beam is performed to reproduce information. In the recording/reproduction mode, the optical disk is rotated at a constant linear speed, and an optical head for directing the light beam toward the optical disk is linearly moved in the radial direction of the optical disk.

The optical head has an objective lens for focusing the laser light on the optical disk. The objective lens is supported to be movable in the direction of its optical axis in order to correctly focus the beam at a predetermined region of the optical disk. The objective lens is moved in the direction of its optical axis and maintained in an in-focus state by a movable mechanism of a focal point control system, and the light beam emerged from the objective lens is focused on the optical disk. In order to maintain the objective lens in an in-focus state, an out-of-focus state on the recording medium is detected, and the detection result is fed back to the drive mechanism of the objective lens. As a method for detecting an out-of-focus state, a wedge prism method is conventionally known.

According to the wedge prism method, a light beam received from an information storage medium in the focusing control state passes through a focusing lens and is split into two beams by a wedge prism. The two light beams are output in different directions to define predetermined angles with the optical axis of the incident beam. The split light beams radiate two detectors arranged at predetermined positions and are converted into electrical signals. The electrical signals are processed in accordance with a predetermined method, and a current corresponding to a focusing error is supplied to the voice coil for driving the objective lens. When the current is supplied to the voice coil, the objective lens is driven, and the light beam is focused on the information storage medium.

In focusing control using the wedge prism method, the light beam is split into two beams by the wedge prism in different directions to define predetermined angles with an incident optical axis. Therefore, distance $d$ between the two detectors for detecting the two beams largely depends on the distance between the wedge prism and the detectors in the direction of the optical axis. In order to perform correct focusing control, the distance between the detectors must be adjusted in accordance with the position of the wedge prism.

It is an object of the present invention to provide a new focus detection optical system for detecting a focusing state of an optical system.

It is another object of the present invention to provide an apparatus for detecting a focusing state, which is free from a problem of positional adjustment of the distance between the detectors which is caused by a positional displacement of optical components along the optical axis, and which is easy to assemble and adjust.

According to the present invention, there is provided an apparatus for detecting a focusing state of an optical system, comprising focusing means for focusing a light beam emitted by a light source on a recording medium, means, provided in the optical path of the light beam reflected by the recording medium, for splitting the light beam into a plurality of light beams substantially parallel to the incident beam, means for detecting light emerged from the splitting means, and control means for controlling the focusing state of the beam focused on the recording medium.

This invention can be more fully understood from the following detailed description when taken in conjunction with the accompanying drawings, in which:

Fig. 1 is a plan view showing the schematic arrangement of an optical head having a focusing state detecting apparatus according to a first embodiment the present invention;

Fig. 2 is a perspective view of a main part of the focusing state detecting apparatus according to the first embodiment of the present invention;

Figs. 3A and 3B are side views, respectively, showing a relationship between the inclination angle of two parallel plates arranged on the optical axis of the light beam and a displacement of the optical axes of the two split light beams;

Fig. 4 is a front view showing the schematic arrangement of an optical head having a focusing state detecting apparatus according to a second embodiment of the present invention;

Fig. 5 is a perspective view of a main part of the focusing state detecting apparatus according to the second embodiment of the present invention;

Fig. 6 shows the optical path of a light beam incident on a birefringent member shown in the second embodiment of the present invention;

Fig. 7 shows the optical paths of light beams when polarized beams are incident on two birefringent members having different optic axes of wave normal;

Figs. 8A to 8C are front views, respectively, of an 8-segment optical detector showing an in-focus/out-of-focus state of a light beam radiated on the light detectors shown in Figs. 2 and 5;

Figs. 9A to 9C are front views, respectively, of the 8-segment optical detector showing an in-track/out-of-track state of the light beam radiated on the optical detectors shown in Figs. 2 and 5;

Fig. 10 is a front view of the optical detector shown in Figs. 2 and 5;

Figs. 11A and 11B are electric circuit diagrams showing a processing method for a signal detected by the optical detector shown in Fig. 10;

Fig. 12 is an electric circuit diagram showing a processing method for all the signals detected by the optical detector show in Fig. 10;

Figs. 13A to 13C are front views, respectively, of a 4-segment optical detector that can be adopted in the present invention and showing an in-focus/out-of-focus state of the radiated light beam;

Fig. 14 is an electric circuit diagram showing a processing method for a signal detected by the optical detector shown in Fig. 13;

Fig. 15 is a perspective view of a main part of a focusing state detecting apparatus according to a third embodiment of the present invention;

Fig. 16 is a perspective view of a main part of a focusing state detecting apparatus according to a fourth embodiment of the present invention;

Fig. 17 is a front view of a 6-segment optical detector showing a focused state of the light beam radiated on the optical detector shown in Figs. 15 and 16;

Fig. 18 is an electric circuit diagram showing a processing method for all the signals detected by the optical detector shown in Fig. 16; and

Fig. 19 is a perspective view of a main part of a focusing state detecting apparatus according to a fifth embodiment of the present invention.

Preferred embodiments of the present invention will be described with reference to the accompanying drawings.

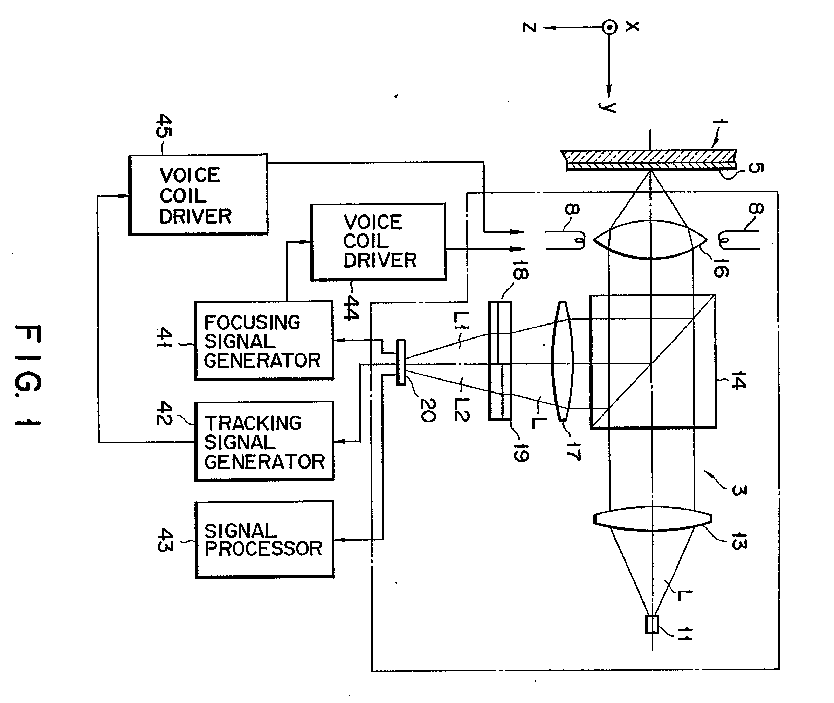

Fig. 1 is a plan view of an optical disk system in which an apparatus for detecting a focusing state of the optical disk system according to the present invention is incorporated. Referring to Fig. 1, optical disk (recording medium) 1 is obtained by coating a metal film of, e.g., tellurium or bismuth, as an information recording film on a glass or plastic disk-shaped substrate. Groove 5 serving as a tracking guide for defining a recording region is concentrically formed on the disk substrate. Optical head 3 is arranged to oppose optical disk 1. In the recording/retrieval mode, disk 1 is rotated with respect to head 3 at a constant linear speed. In Fig. 1, groove 5 defining the recording region extends in the z-direction.

Optical head 3 has semiconductor laser 11 as a light source. Laser 11 generates divergent laser beam L. In the recording mode for writing information in the recording film of optical dis 1, laser beam L is generated to have a modulated light power in accordance with the information to be written. In the reproduction mode for reading the information from the recording film of disk 1, laser beam L is generated to have a predetermined power. Divergent laser beam L generated by semiconductor laser 11 is converted into a collimated beam by collimating lens 13 and guided to half prism 14. Then, laser beam L becomes incident on objective lens 16 through half prism 14, and is focused on the recording film of optical disk 1 by lens 16.

Objective lens 16 is supported to be movable in the direction of its optical axis and within a plane perpendicular to the optical axis. When lens 16 is arranged at an optimal position, i.e., an in-focus position on the optical axis, the beam waist of focused laser beam L emerged from lens 16 is projected on the surface of the recording film of optical disk 1. Thus, a minimum beam spot is formed on the surface of the recording film of optical disk 1. On the other hand, when objective lens 16 is arranged at an optimal position, i.e., an in-track position within a plane (parallel to the recording film surface) perpendicular to the optical axis, the beam spot formed on disk 1 is correctly formed on the track defined as the recording region, and thus the track is followed by the laser beam. When the above two states (in-focus state; in-track state) are maintained, information can be written or read out. More specifically, in the recording mode, a change is caused in, e.g., a pit of the recording film by the intensity-modulated laser beam. In the reproduction mode, a laser beam having a predetermined intensity is intensity-modulated within the recording region defined by, e.g., a pit of the track and is reflected.

In an in-focus state, divergent laser beam L reflected by the recording film of optical disk 1 is converted into a collimated beam by objective lens 16 and is returned to half prism 14. Beam L is reflected by half prism 14, passes through spherical focusing convex lens 17, and becomes incident on first and second optical refracting members 18 and 19 arranged on the optical axis. First and second optical refracting members 18 and 19 are arranged on the optical path of the incident light beam, and split the light beam into first and second light beams L1 and L2 which radiate optical detector 20. Light beams L1 and L2 radiated on optical detector 20 are converted into electrical signals by the photo sensitive regions and processed by a predetermined method. Upon signal processing, a focusing error signal is generated by focusing signal generator 41. In accordance with the generated signal, a current is supplied to voice coil 8 to drive objective lens 16 in the direction of its optical axis, and the focusing state of the light beam is thus controlled. A tracking error signal is also generated by tracking signal generator 42. In accordance with the tracking error signal, a current is supplied to voice coil driver 45 to linearly drive objective lens 16 within a plane perpendicular to the optical axis of objective lens 16, and a predetermined track is thus followed by the light beam. The signals detected by the photo sensitive regions are processed by signal processor 43 and utilized to obtain a retrieve signal.

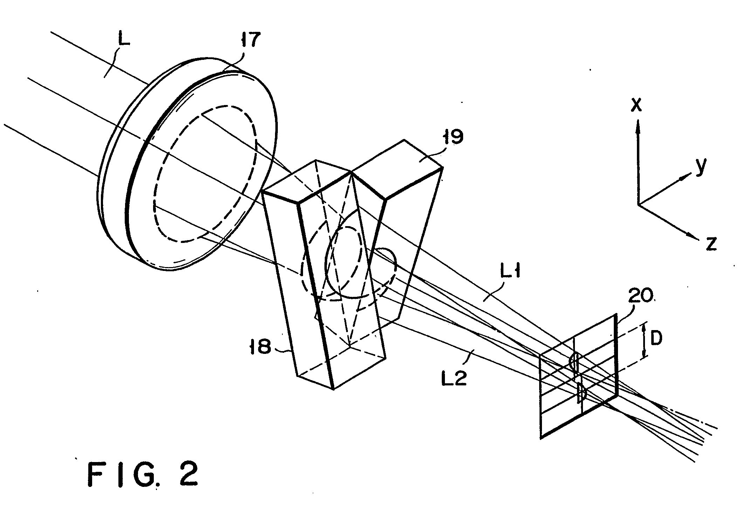

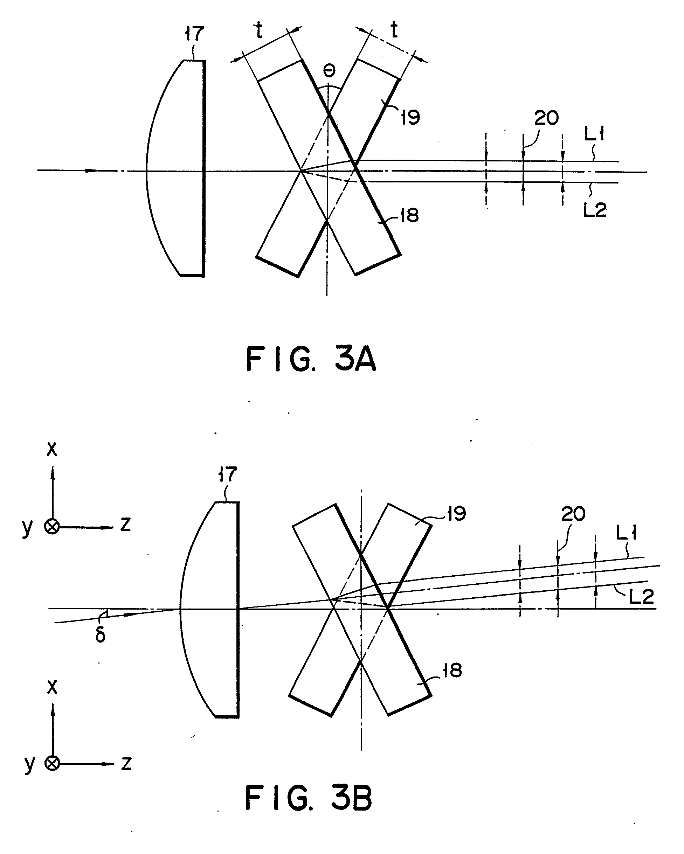

The function of first and second optical refracting members 18 and 19 will be described in detail with reference to Fig. 2. First and second optical refracting members 18 and 19 are made of, e.g., glass plates and have a parallel plate-like shape preferably having the same thickness. Each parallel plate has side surfaces parallel to the x-z plane. Refracting members 18 and 19 are arranged such that their opposing side surfaces contact the optical axes of the incident beams. Furthermore, the incident and output surfaces of first and second plates 18 and 19 define predetermined angles with a plane perpendicular to the optical axis, and more preferably are directed in different directions to define the same angle with the optical axis. As a result, the incident light beam is split by a line extending in the x-direction perpendicular to a direction in which the shadow of a groove in the optical disk is projected. When the incident and output surfaces of first and second parallel plates 18 and 19 are inclined, the light beam passing through plates 18 and 19 is split into first and second light beams L1 and L2 having first and second axes that are substantially parallel to the optical axis of incident light beam L and have predetermined distance D therebetween, and beams L1 and L2 radiate optical detector 20. Distance D between beams L1 and L2 depends on refractive index n of plates 18 and 19 and angle $\theta$ defined by plates 18 and 19 and thickness of plate t. This relationship is shown in Figs. 3A and 3B.

Fig. 3A shows the optical paths of first and second light beams L1 and L2 emerged from first and second parallel plates 18 and 19 to be substantially parallel to the optical axis of incident light beam L. Referring to Fig. 3A, plates 18 and 19 are made of the same material having the same thickness. Displacement D between the optical axes of light beams L1 and L2 can be approximated as D = $(1 - 1/n)\theta t$, where t is the thickness of plates 18 and 19, n is the refractive index of plates 18 and 19, and $\theta$ is an angle defined by plates 18 and 19. If angle $\theta$ is comparatively small, displacement D of the optical axes of the light beams does not depend on the mutual distance among focusing lens 17, parallel plates 18 and 19, and optical detector 20.

Fig. 3B shows a displacement of the optical axes of two split light beams L1 and L2 generated when a light beam is erroneously incident on two glass plates 18 and 19 at angle $\delta$ with respect to the optical axis. When a light beam is incident at angle $\delta$ with respect to the optical axis, the displacement generated by plate 19 is increased by $(1 - 1/n)\delta t$, and that generated by plate 18 is decreased by $(1 - 1/n)\delta t$. As a result, displacement D of the optical axes of the two light beams does not depend on angle $\delta$ when angle $\theta$ defined by the two glass plates is comparatively small. In this manner, distance D between the light beams emerged from parallel plates 18 and 19 of the present invention is maintained at a substantially constant value without being influenced by the displacement of the respective optical components in the direction of the optical axis. Thus, a focusing state detecting apparatus which can be easily assembled and adjusted is provided.

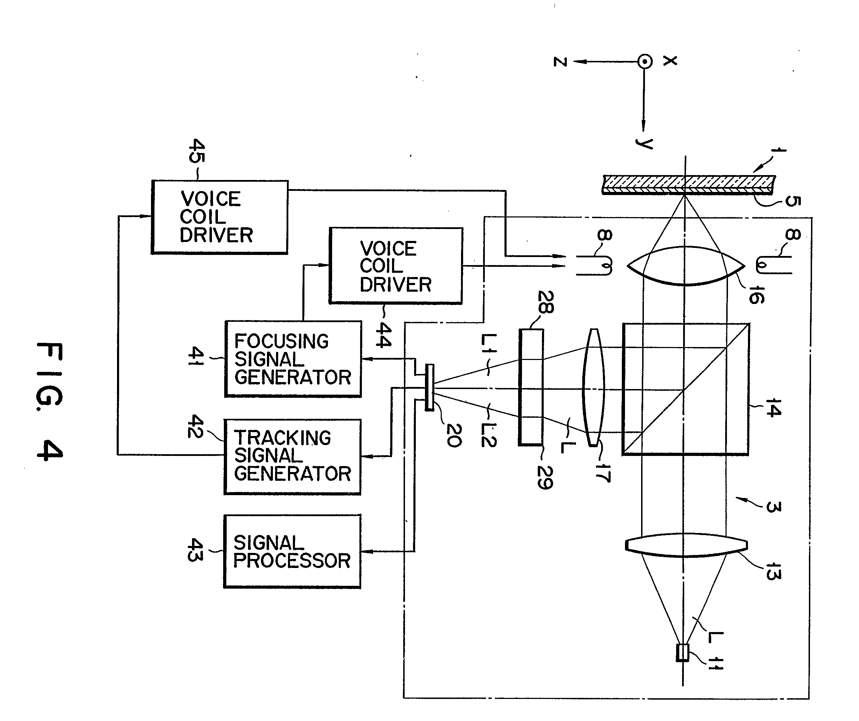

In the above embodiment, parallel plates 18 and 19 as optical refracting materials are inclined with respect to the optical axis of the incident light beam in order to split incident light beam L into substantially parallel two light beams L1 and L2. However, light beam L can be split into parallel beams by other optical refracting members. Fig. 4 shows an optical head using another optical refracting member. Referring to Fig. 4, the same reference numerals as in Fig. 1 denote the same portions.

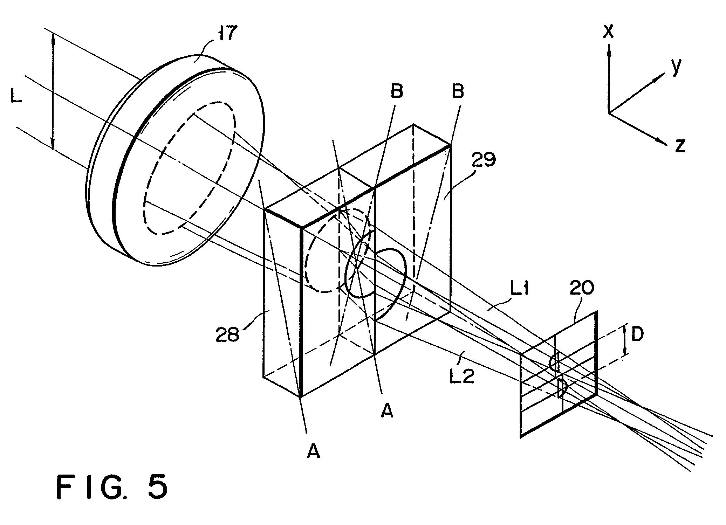

Referring to Fig. 4, first and second birefringent members 28 and 29 are arranged in place of first and second parallel plates 18 and 19 as the optical refracting members. When the shapes and optic axes of birefringent members 28 and 29 are properly selected, incident light beam L is split into two parallel light beams. The arrangement of birefringent members 28 and 29 and a detector behind them is shown in Fig. 5. Referring to Fig. 5, birefringent members 28 and 29 consist of an uniaxial crystal material such as calcite and have a parallel-plate like shape. The respective birefringent members have side surfaces parallel to the x-z plane, and their opposing side surfaces contact the optical axis of the incident light beam. First and second birefringent members 28 and 29 are preferably arranged such that their incident and output surfaces are perpendicular to the optical axis of incident light beam L. Furthermore, first optic axis A of first birefringent member 28 and second optic axis B of second birefringent member 29 define predetermined angles with the optical axis of incident light beam L. It is preferable that optic axes A and B of birefringent members 28 and 29 are directed in different directions to define the same angle with the optical axis of the incident light beam. As a result, incident light beam L is split by a line in the x-direction which is perpendicular to a direction in which the shadow of the groove in the optical disk is projected. When first and second birefringent members 28 and 29 are arranged such that their optic axes A and B, respectively, extend in directions different from that of the optical axis of the incident light beam to define the same angle with the optical axis of the incident light beam, the light beam that has passed birefringent members 28 and 29 is split into first and second light beams L1 and L2 that are substantially parallel to the optical axis of incident light beam L and have predetermined distance D therebetween. Split light beams L1 and L2 are incident on optical detector 20 and are converted into electrical signals by the photo sensitive regions of detector 20. The electrical signals are processed by a predetermined method similar to that in Fig. 1, and focusing control, tracking control, and information retrieval are achieved.

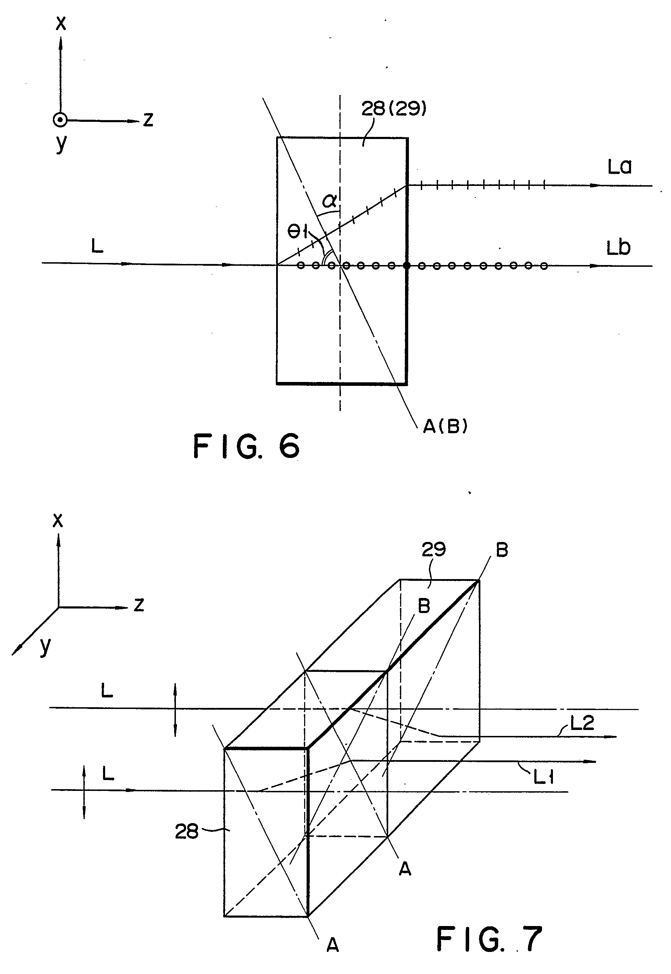

Fig. 6 shows how light beam L undergoes birefringence when it is applied to birefringent member 28.

As is shown in Fig. 6, birefringent member 28 is, for example, an uniaxial crystal having an optic axis A. Preferably, it is a rectangular plate. It has an incident surface for receiving light beam L and an output surface for emitting two light beams obtained from beam L. Both the light-receiving surface and the light-emitting surface are perpendicular to light beam L. Birefringent member 28 has two parallel sides, either being parallel to an X-Z plane (i.e., the plane of the paper), where Z is an axis identical with the axis of light beam L and X is an axis crossing at right angle to axis Z. The optic axis A inclines at a predetermined angle to the axis of beam L. More specifically, the plane containing the optic axis A of birefringent member 28 is perpendicular to the X-Z plane, and also inclined to Z-Y plane containing the axis of beam L 28 at acute angle $\theta 1$ (i.e., $\theta 1 = 90° - \alpha$, where $0° < \alpha < 90°$).

When light beam L is applied to birefringent member 28, one part of beam L, or a first beam component La, is refracted upward with respect to the axis of beam L (Fig. 6), whereas the remaining part of beam L, i.e., the second beam component Lb, is passes straight through birefringent member 28. This is because the beam component La has a vibration vector perpendicular to the axis of beam L and parallel to the X-Z plane, and the beam component Lb has a vibration vector perpendicular to the axis of beam L and also to the plane of the X-Z plane. In other words, birefringent member 28 splits the light beam L into beam La (an extraordinary ray) having a vibration vector parallel to the principal plane (i.e., the X-Z plane containing the optic axis of member 28 and the line in which both beam components La and Lb pass through member 28) and beam Lb (an ordinary ray) having a vibration vector perpendicular to the principal plane.

The angle $\theta 1$, at which the optic axis A inclined to the axis of light beam L, is set in accordance with the cross-sectional shape of the beam L, such that the beam L may easily be slit into light beams La and Lb.

A case wherein a pair of birefringent members are arranged will be described with reference to Fig. 7. A pair of birefringent members 28 and 29 have the same shape and the same characteristics. Optic axes A and B of birefringent members 28 and 29 are predetermined in different directions to define the same angle with the optical axis of incident light beam L. When polarized beam L having a plane of vibration on a plane (principal section) including the optical axis and the optic axes is incident on birefringent members 28 and 29, all the light beams passing through birefringent members 28 and 29 undergo birefringence. As a result, the light beam incident on one birefringent member 28 undergoes birefringence to be deviated slightly upward compared with the incident beam, and is emerged (light beam L1). The light beam incident on the other birefringent member 29 undergoes birefringence to be deviated slightly downward compared with the incident beam, and is emerged (light beam L2). In this manner, when the optic axes of the birefringent members are arranged in different directions to define the same angle with the optical axis of the incident light beam, incident light beam L is split into two light beams L1 and L2. In the same manner as in the case of first and second parallel plates 18 and 19 shown in Fig. 2, distance D between light beams L1 and L2 emerged from first and second birefringent members 28 and 29 is maintained at substantially the constant value without being influenced by a displacement of the respective optical components in the direction of the optical axis. As a result, a focusing state detecting apparatus that can be easily assembled and adjusted is obtained.

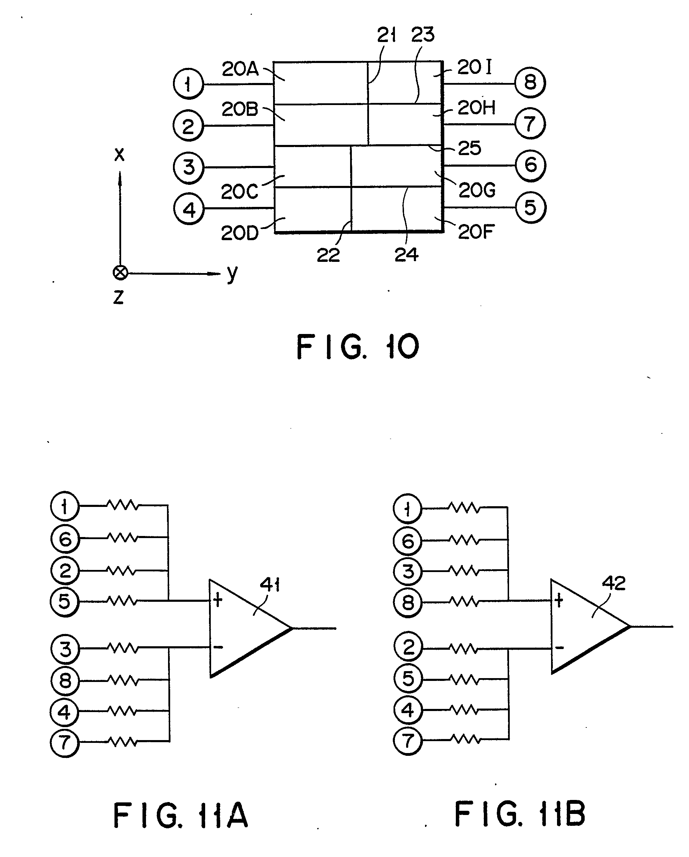

When first and second split light beams L1 and L2 are obtained through parallel plates 18 and 19 or birefringent members 28 and 29 as the optical refracting members, they are incident on optical detector 20 shown in Fig. 10.

As shown in Fig. 10, optical detector 20 comprises eight segment regions consisting of a first group of photo sensitive regions 20A, 20B, 20H, and 20I for converting an incident beam that has passed first optical refracting member 18 (28) into an electrical signal and a second group of photo sensitive regions 20C, 20D, 20F, and 20G for converting an incident beam that has passed second optical refracting member 19 (29) into an electrical signal. Optical detector 20 is vertically divided into two blocks by x-direction separation lines 21 and 22 serving as photo insensitive regions, and is horizontally divided into four blocks by y-direction separation lines 23, 24 and 25. The distance between lines 23 and 24 is equal to distance D between the substantially parallel split light beams. The outputs from separated photo sensitive regions 20A to 20I are used for focal point correction, tracking correction, and information reproduction.

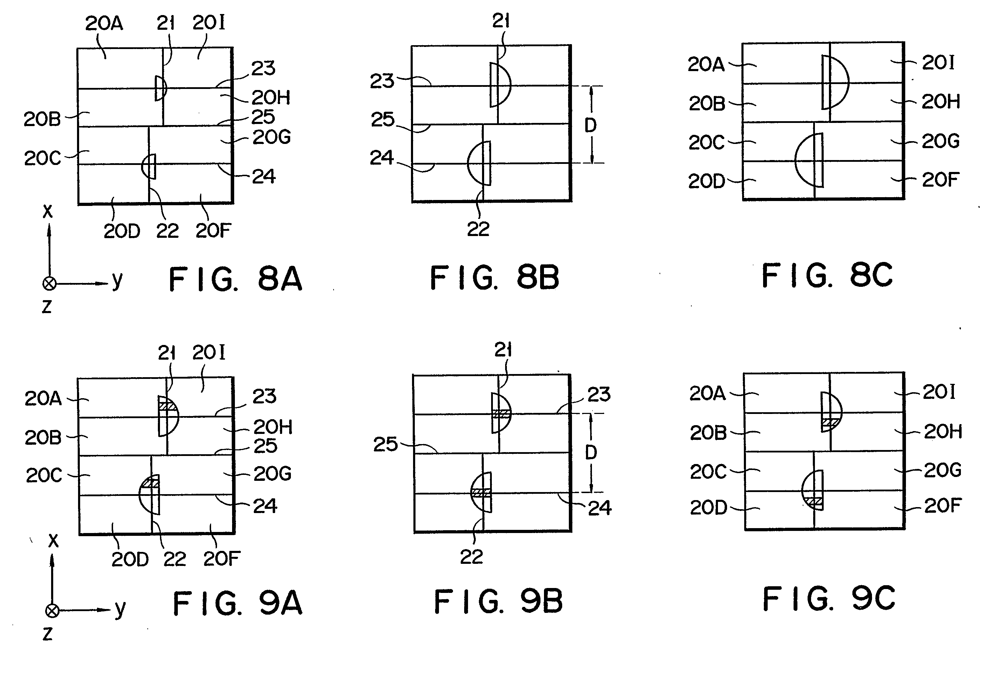

When objective lens 16 is in an in-focus state with the optical disk, an image as shown in Fig. 8B is projected on optical detector 20. A light beam passing through first optical refracting member 18 (28) is projected on the first group of photo sensitive regions 20A, 20B, 20H, and 20I to form a semicircular image. On the other hand, a light beam passing through optical refracting member 19 (29) is projected on the second group of photo sensitive regions 20C, 20D, 20F, and 20G to form a semicircular image in the opposite direction. Separation lines 21 and 22 as the photo insensitive regions are predetermined so as to project the respective semicircular images on the right and left photo sensitive regions with the same intensity. In other words, assuming that the outputs from photo sensitive regions 20A to 20G are ① to ⑧ , as shown in Fig. 11A, separation lines 21 and 22 are set at positions where an F.E (focusing error) signal is equal to zero in the in-focus state, i.e., to satisfy (focusing error) = { (① + ② + ⑤ + ⑥ ) - (③ + ④ + ⑦ + ⑧)} = 0.

As a result of this, when the position of the objective lens 16 with respect to the optical disk 1 is left from the in-focus position, the two semicircular images projected on the first and second groups of photo sensitive regions are smaller than those in the in-focus state, as shown in Fig. 8A, and the output becomes F.E > 0. On the contrary, when the position of the objective lens 16 with respect to the optical disk 1 is approached from the in-focus position, the two semicircular images projected on the first and second groups of photo sensitive regions are larger than those in the in-focus state, as shown in Fig. 8C, and the output becomes F.E < 0.

The dark portions generated by diffraction of the guide groove in optical disk 1 appear to be parallel to separation lines 23 and 24 of the photo sensitive regions, as shown in Fig. 9. As shown in Fig. 11B, a tracking error is detected by calculating output signals ① to ⑧ from photo sensitive regions 20A to 20I, respectively, to obtain a T.E (tracking- error) signal = {(① + ⑧ + ③ + ⑥) - (② + ⑦ + ④ + ⑤)}. The position of the optical head with respect to the optical disk is adjusted in accordance with the tracking error signal.

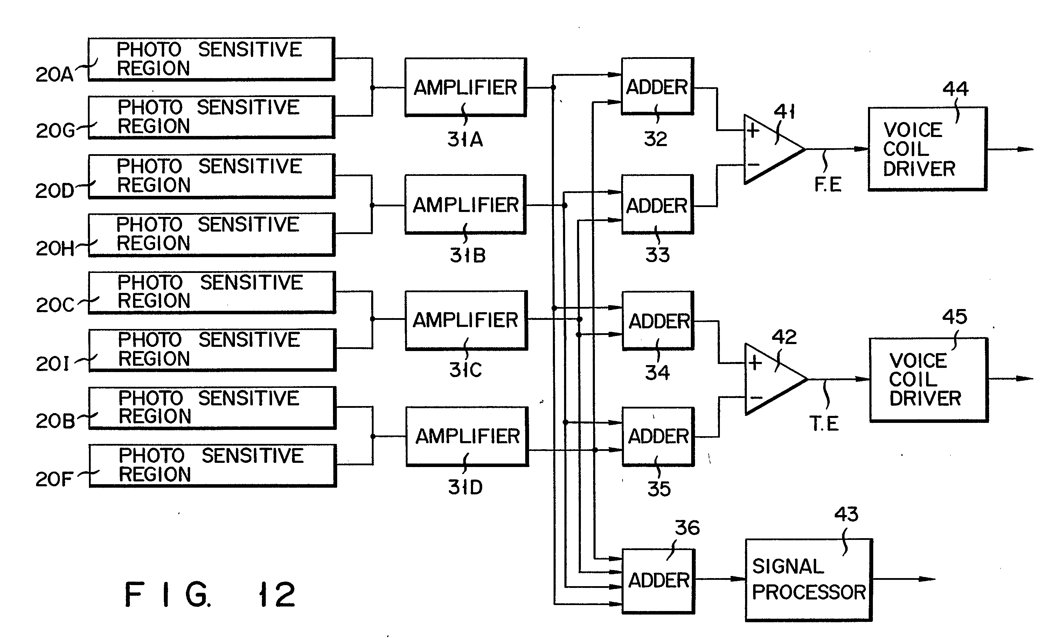

A circuit for processing an electrical signal detected by the optical detector will be described with reference to Fig. 12. The outputs from photo sensitive regions 20A and 20G are supplied to amplifier 31A. The outputs from photo sensitive regions 20D and 20H are supplied to amplifier 31B. The outputs from photo sensitive regions 20C and 20I are supplied to amplifier 31C. The outputs from photo sensitive regions 20B and 20F are supplied to amplifier 31D. The signals respectively supplied to amplifiers 31A to 31D are amplified and supplied to adder 36. The sum signal obtained by adder 36 is supplied to a control circuit (not shown) as an information retrieve signal. The signal from amplifier 31A is also supplied to adders 32 and 34. The signal from amplifier 31B is also supplied to adders 33 and 35. The signal from amplifier 31C is also supplied to adders 33 and 34. The signal from amplifier 31D is also supplied to adders 32 and 35.

The outputs from adders 32 and 33 are used to supply a focusing control signal to voice coil driver 44. More specifically, the output from adder 32 is supplied to the inverting input terminal of differential amplifier 41, and the output from adder 33 is supplied to the non-inverting input terminal of differential amplifier 41. Differential amplifier 41 as the focusing signal generator compares the sum of the detection signals from photo sensitive regions 20A, 20G, 20B, and 20F and the sum of the detection signals from photo sensitive regions 20C, 20I, 20D, and 20H. An output of differential amplifier 41 corresponding to the difference signal between the two sums, i.e., a focusing control signal is fed back to voice coil driver 44. A current is supplied to a coil (not shown) for driving objective lens 16 in the direction of its optical axis in accordance with the focusing error signal fed back to driver 44. Objective lens 16 is driven in accordance with the current supplied to its drive coil, and the focusing error is corrected.

The outputs from adders 34 and 35 are used to supply a tracking control signal to voice coil driver 45. The output from adder 34 is supplied to the inverting input terminal of differential amplifier 42, and the output from adder 35 is supplied to the non-inverting input terminal of differential amplifier 42.

Differential amplifier 42 as the tracking signal generator compares the sum of the detection outputs from photo sensitive regions 20A, 20G, 20C, and 20I with the sum of the detection outputs from photo sensitive regions 20B, 20F, 20D, and 20H, and an output corresponding to a difference between the two sums, i.e., a tracking error detection signal is fed back to voice coil driver 45. A current is supplied to a coil (not show) for driving objective lens 16 within a plane perpendicular to the optical axis of lens 16 in accordance with the tracking control signal fed back to voice coil driver 45. As a result, objective lens 16 is driven to correct the tracking error.

The output from adder 36 is supplied to signal processor 43. The signal processed by processor 43 is used as a retreive signal for information retrieval.

In the focusing state detecting apparatus described above, divergent laser beam L generated by semiconductor laser 11 is coverted into a collimated beam by collimtor lens 13 and guided to half prism 14. Laser light L then passes through prism 14 and becomes incident on objective lens 16. The incident light beam is focused on the recording film of optical disk 1 by objective lens 16.

In the recording mode, optical disk 1 is irradiated with a laser beam (recording beam) having a high modulated intensity, thereby forming a pit in the track of disk 1. In the reproduction mode, optical disk 1 is irradiated with a weak steady-state laser beam (reproduction beam), and the laser beam is intensity-modulated by the pit.

When the reproduction beam is reflected by optical disk 1, it is converted into a collimated beam by objective lens 16 and returned to half prism 14. Laser beam L reflected by half prism 14 passes through spherical convex lens 17 and becomes incident on first and second optical refracting members 18 (28) and 19 (29). The light beams incident on first and second optical refracting members 18 (28) and 19 (29) are split into substantially parallel first and second light beam L1 and L2 with respect to the optical axes thereof, and split beams L1 and L2 respectively radiate photo sensitive regions 20A, 20B, 20I, and 20H; and 20C, 20D, 20G, and 20F of optical detector 20. As a result, signals corresponding to the radiated light are output from regions 20A to 20I and are supplied to amplifiers 31A to 31D.

A focusing operation in this state will be described. More specifically, the signals from amplifiers 31A to 31D are supplied to adder 32. The signals from amplifiers 31B and 31C are supplied to adder 33. The detection signals from photo sensitive regions 20A, 20G, 20B, and 20F are added by adder 32 and the sum signal is supplied to differential amplifier 41. The detection signals from photo sensitive regions 20C, 20I, 20D, and 20H are added by adder 33, and the sum signal is supplied to differential amplifier 41. As a result, differential amplifier 41 as the focusing signal generator compares the sum of the detection signals from regions 20A, 20G, 20B, and 20F with the sum of the detection signals from regions 20C, 20I, 20D, and 20H. The obtained error signal, i.e., a focusing control signal is fed back to voice coil driver 44. A current is supplied to a coil (not shown) in accordance with the focusing control signal fed back to driver 44. Objective lens 16 is driven in the direction of its optical axis in accordance with the supplied current, and the focusing state of the light beam is controlled.

The tracking operation will be described. More specifically, the signals from amplifiers 31A and 31C are supplied to adder 34. The signals from amplifiers 31B and 31D are supplied to adder 35. The signals from photo sensitive regions 20A, 20G, 20C, and 20I are added by adder 34, and the sum signal is supplied to comparator 42. The detection signals from photo sensitive regions 20B, 20F, 20D, and 20H are added by adder 35, and the sum signal is supplied to comparator 42. As a result, comparator 42 as the tracking signal generator compares the sum of the detection signals from regions 20A, 20G, 20C, and 20I with the sum of the detection signals from regions 20B, 20F, 20D, and 20H. An error signal corresponding to the difference between the two sums, i.e., a tracking control signal is fed back to voice coil driver 45. A current is supplied from voice coil driver 45 to a coil (not shown) in accordance with the tracking control signal. Objective lens 16 is driven by the supplied signal to move within a plane perpendicular to its optical axis, and the tracking position of the light beam is controlled.

Information retrieval or reproduction will be described. In the reproduction mode, semiconductor laser 11 generates constant weak laser beam L. Thus, the reproduction beam is intensity modulated in accordance with the recorded information and becomes incident on the optical detector. The outputs from photo sensitive regions 20A to 20H of the optical detector are supplied to amplifiers 31A, 31B, 31C, and 31D. When all the outputs from amplifiers 31A, 31B, 31C, and 31D are processed by signal processor 43, the recorded data is reproduced.

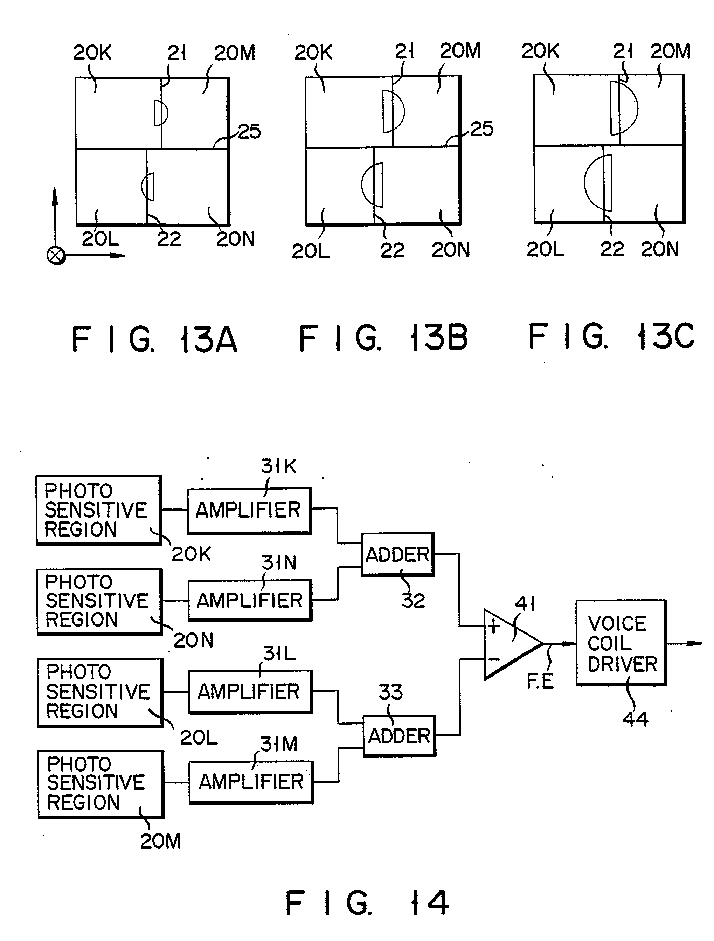

In the first embodiment of the present invention described above, a single 8-segment detector is used for focusing control, tracking control and signal detection. However, the detector is not limited to the 8-segment type but can be 4-segment or other types. For example, a focusing state detection signal can be obtained by 4-segment optical detector 20 having a simple arrangement as shown in Fig. 13.

In the drawings of a second embodiment of the present invention, note that the same reference numerals as those of the first embodiment of the present invention described above denote the same portions and a detailed description thereof is omitted.

Fig. 13 shows optical detector 20 having 4-segment photosensitive regions used for the apparatus for detecting a focusing state of a light beam according to the present invention.

Optical detector 20 shown in Fig. 13 consists of four segment regions, i.e., a first group of photo sensitive regions 20K and 20M for converting an incident beam passing through optical refracting member 18 (28) into an electrical signal and a second group of photo sensitive regions 20L and 20N for converting an incident beam passing through optical refracting member 19 (29) into an electrical signal.

When objective lens 16 is in an in-focus state with the optical disk, images as shown in Fig. 13B are projected on optical detector 20. The light beam passing through optical refracting member 18 (28) is projected on the first group of photo sensitive regions 20K and 20M to form a semicircular image, and the light beam passing through optical refracting member 19 (29) is projected on the second group of photo sensitive regions 20L and 20N to form a semicircular image in the opposite direction. X-direction separation lines 21 and 22 as photo insensitive regions are defined at substantially the central portions so as to project the respective semicircular images on the right and left photo sensitive regions with the same intensity. In other words, in the in-focus state, separation lines 21 and 22 are set to satisfy F.E = [( ① + ④ ) - ( ② + ③ )} = 0 where ① to ④ are the outputs from photo sensitive regions 20K to 20N, respectively.

When objective lens 16 is removed from the in-focus position with respect to the optical disk, the two vertical semicircular images are smaller than those in the in-focus state, and the output is F.E > 0. On the contrary, when objective lens 16 is moved to approach the in-focus position with respect to the optical disk, the two vertical semicircular images are larger than those in the in-focus state, and the output is F.E < 0.

The output signal from optical detector 20 is processed by a control system electric circuit shown in Fig. 14.

The outputs from photo sensitive regions 20K to 20N are respectively supplied to amplifiers 31K to 31N. The signals amplified by amplifiers 31K and 31N are supplied to adder 32. The signals amplified by amplifiers 31L and 31M are supplied to adder 33. The sum signal obtained by adder 32 is supplied to the inverting input terminal of differential amplifier 41, and the sum signal obtained by adder 33 is supplied to the non-inverting input terminal of differential amplifier 41. Differential amplifier 41 as the focusing signal generator compares the sum signal of the detection signals from regions 20K and 20N with the sum signal of the detection signals from regions 20L and 20M. In accordance with te obtained error signal, i.e., a focusing error detection signal, a current is supplied to a coil (not shown) for driving objective lens 16 in a direction substantially perpendicular to the recording surface of optical disk 1, and objective lens 16 is driven, thereby correcting the focusing error.

In the second embodiment described above, the optical refracting member comprises parallel glass plates 18 and 19 or birefringent members 28 and 29. However, the optical refracting member can be made of antoher transparent material and can have another shape. The shape of the optical refracting member can be changed as long as the refracting member has the same effect. The position of the optical refracting member, and accordingly the position of the detector can be changed. For example, in this embodiment, two optical refracting members are symmetrically arranged on the optical axis of an incident light beam. However, even when two optical refracting members are not summetrically arranged on the optical axis of an incident light beam, detection can be performed in the same manner if the position of the detector and those of separation lines 21 to 25 on the detector are predetermined.

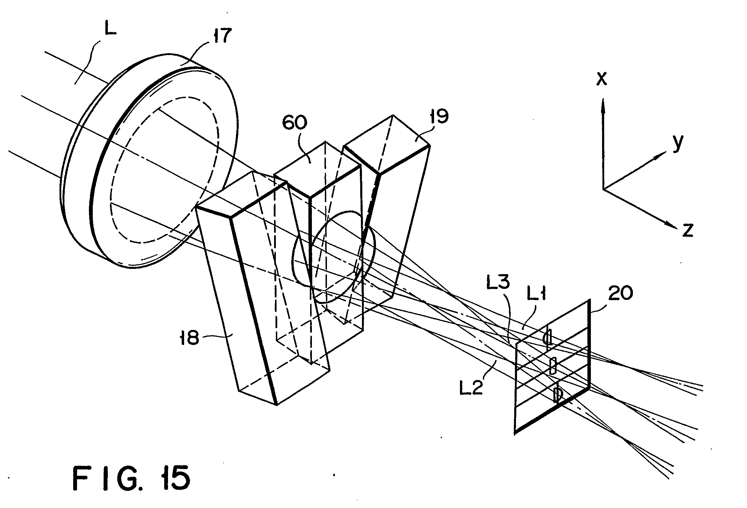

Furthermore, the present invention is not limited to the embodiments having detector 20 and two optical refracting members 18 (28) and 19 (29) described above. For example, focusing control, tracking control, and information retrieval can be performed with another method as shown in Fig. 15. In Fig. 15, third parallel plate 60 is arranged between first and second parallel plates 18 and 19 similar to those shown in Fig. 2. An optical detector having 6-segment regions is provided for detecting light beams split by first and second parallel plates 18 and 19 and third parallel plate 60.

As in the embodiments described above, divergent laser beam L reflected by the recording film of optical disk 1 passes through an objective lens and a half prism and is incident on spherical focusing convex lens 17. The incident light beam is focused by lens 17 and incident on first and second parallel plates 18 and 19 and third parallel plate 60 arranged on the optical path of lens 17. Plates 18, 19, and 60 split incident light beam L into three substantially parallel light beams (L1, L2, L3). The split light beams are respectively incident on optical detectors arranged at predetermined positions. This operation will be described in more detail with reference to Fig. 15. First and second parallel plates 18 and 19 and third parallel plate 60 are, e.g., glass plates, and preferably have the same thickness. The incident and output surfaces of first and second plates 18 and 19 are arranged at predetermined angles with respect to a plane perpendicular to the optical axis, and are preferably arranged in different directions to define the same angle with the optical axis. In this embodiment, third parallel plate 60 is arranged in addition to first and second plates 18 and 19. Third parallel plate 60 is sandwiched between the opposing side surfaces of first and second plates 18 and 19, and its incident and output surfaces are perpendicular to the optical axis of incident light beam L. The light beam passing through spherical convex lens 17 is incident on three parallel plates 18, 19, and 60 arranged in this manner and is split into three light beams (L1, L2, L3). More specifically, central beam L3 including the optical axis of the incident light beam is transmitted through third parallel plate 60 straight and becomes incident on the optical detector. Light beam L1 incident on plate 18 inclined with respect to the optical axis is refracted to be deviated slightly upward compared with the incident light beam and emerges to be substantially parallel to light beam L3. The remaining light beam L2 incident on plate 19 inclined with respect to the optical axis is refracted to be deviated slightly downward compared with the incident light beam and emerges to be substantially parallel to light beam L3. In this manner, incident light beam L is split into three substantially parallel light beams by parallel plates 18, 19, and 60 arranged in the x-direction perpendicular to the direction on which the groove of the optical disk is projected, and the split beams are incident on optical detector 20.

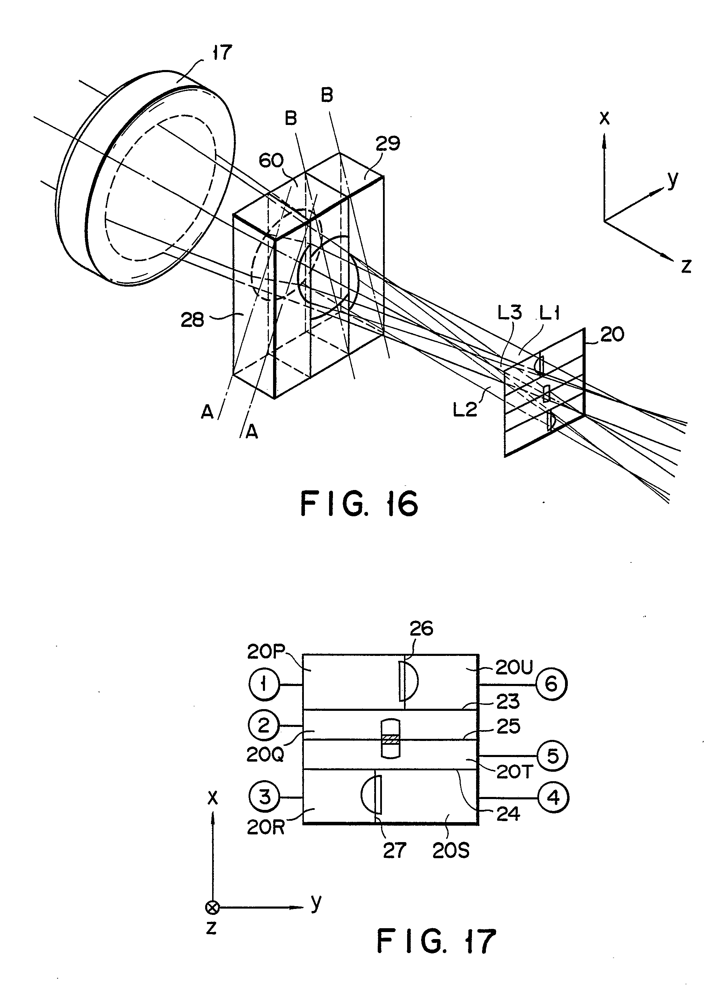

In the embodiment described above, parallel plates 18, 19, and 60 made of glass or the like are arranged on the optical path of the incident light beam L to split it into substantially parallel three light beams. However, light beam L can be split by another optical refracting member. Fig. 16 shows an apparatus using another optical refracting member. In Fig. 16, the same portions as in Fig. 15 are denoted by the same reference numerals.

Referring to Fig. 16, first and second parallel plates 18 and 19 shown in Fig. 15 are replaced by first and second birefringent members 28 and 29. First and second birefringent members 28 and 29 are made of an uniaxial crystal material such as calcite and preferably have a parallel plate-like shape of the same thickness. In this embodiment, in the same manner as in Fig. 14, parallel plate 60 made of glass or the like is arranged in addition to first and second birefringent members 28 and 29. First and second birefringent members 28 and 29, and parallel plate 60 have side surfaces parallel to the x-z plane. Plate 60 is arranged such that its incident and output surfaces are perpendicular to the optical axis of incident light beam L. First and second birefringent members 28 and 29 are arranged on the two sides of plate 60 such that their opposite surfaces contact the two sides of plate 60. The incident and output surfaces of first and second birefringent members 28 and 29 are also perpendicular to the optical axis of incident light beam L. In this case, optic axes A and B of first and second birefringent members 28 and 29, respectively, are set to define predetermined angles with the optical axis of the incident light beam, and are preferably set in different directions to define the same angle with the optical axis of incident light beam L. The principle of the birefringent members is the same as that described with reference to Figs. 6 and 7 and a detailed description thereof will be omitted. A polarized beam having a plane of vibration on a plane (principal section) including an optical axis and the optic axes of the birefringent members is incident on optical refracting members 28, 29, and 60. Thus, the polarized beam is split into three beams (L1, L2, L3). More specifically, central beam L3 including the optical axis of the incident light beam passes through third parallel plate 60 straight and is incident on the optical detector. Light beam L1 incident on birefringent member 28 having an optic axis inclined with respect to the optical axis undergoes birefringence. Thus, light beam L1 is shifted to be slightly upward compared with the incident light beam, and a beam substantially parallel to light beam L3 emerges from birefringent member 28. Light beam L2 incident on birefringent member 29 having an optic axis inclined with respect to the optical axis also undergoes birefringence. Thus, light beam L2 is also deviated to be slightly downward compared with the incident light beam, and a beam substantially parallel with light beam L3 emerges from birefringent member 29. In this manner, incident light beam L is split into three substantially parallel light beams by optical refracting members 28, 29, and 60 arranged to be perpendicular to the extending direction of the shadow of the groove of the optical disk, and the split beams are incident on optical detector 20.

The arrangement of optical detector 20 for receiving light beams L1, L2, and L3 will be described with reference to Fig. 17. Optical detector 20 comprises six segment regions. Namely, detector 20 comprises a first group of photo sensitive regions 20P and 20U for converting light beam L1 passing through birefringent member 18 (28) into an electrical signal, a second group of photo sensitive regions 20R and 20S for converting light beam L2 passing through birefringent member 19 (29) into an electrical signal, and a third group of photo sensitive regions 20Q and 20T for converting light beam L3 passing through optical refracting member 60 into an electrical signal. The respective photo sensitive regions are separated by separation lines 21 and 22 serving as photo insensitive regions and extending in the x-direction and by separation lines 23, 24 and 25 serving as photo insensitive regions and extending in the y-direction. The output signals from the first group of regions 20P and 20U and the second group of regions 20R and 20S are used for performing focusing correction. The output signals from the third group of regions 20Q and 20T are used for tracking. The output signals from regions 20P to 20U are used for performing information retrieval.

When objective lens 16 is in an in-focus state with the optical disk, images as shown in Fig. 17 are formed on optical detector 20. Light beam L1 passing through optical refracting member 18 (28) is projected on the first group of photo sensitive regions 20P and 20U to form a semicircular image, and light beam L2 passing through optical refracting member 19 (29) is projected on the second group of photo sensitive regions 20R and 20S to form a semicircular image in the opposite direction. Separation lines 21 and 22 as the photo insensitive regions are predetermined such that the respective semicircular images are projected on the right and left photo sensitive regions at the same intensity. In other words, separation lines 21 and 22 are set to equal F.E (focusing error) signal to 0 in the in-focus state, i.e., F.E (focusing error) signal = $\{(\textcircled{1} + \textcircled{4}) - (\textcircled{3} + \textcircled{6})\} = 0$ where $\textcircled{1}$ to $\textcircled{6}$ are the outputs from regions 20P to 20U, respectively, as shown in Fig. 17.

When objective lens 16 is removed from the in-focus position with respect to the optical disk, the vertical semicircular images are smaller than those in the in-focus state, and in this case the output is F.E > 0. On the contrary, when objective lens 16 is moved to approach the in-focus position with respect to the optical disk, the vertical semicircular images are larger than those in the in-focus state, and the output is F.E < 0.

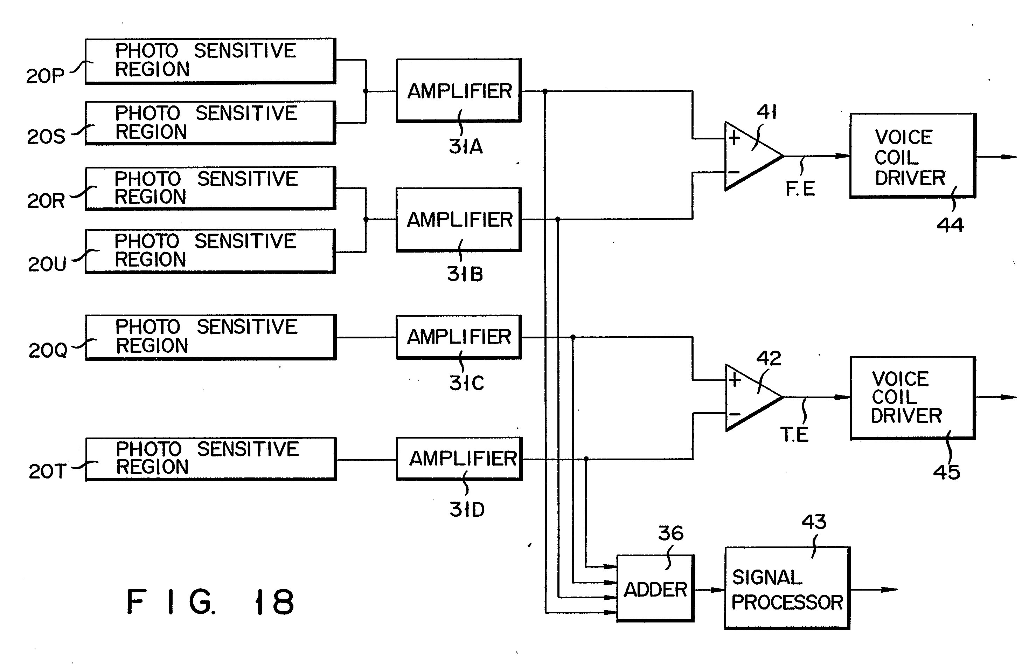

The dark portion caused by diffraction of the guide groove of optical disk 1 appears to be parallel to separation lines 23 and 24 of the photo sensitive regions. The tracking position is detected by calculating output signals $\textcircled{1}$ to $\textcircled{6}$ from photo sensitive regions 20P to 20U to obtain a T.E (tracking error) signal $= \{(\textcircled{2}) - (\textcircled{5})\}$. The position of the optical head is adjusted with respect to the optical disk in accordance with the difference signal of the two compared signals, i.e., the tracking error signal. A circuit for processing such an electrical signal is shown in Fig. 18.

The control system electric circuit will be described with reference to Fig. 18. The sum of the outputs from photo sensitive regions 20P and 20S is supplied to amplifier 31A. The sum of the outputs from photo sensitive regions 20R and 20U is supplied to amplifier 31B. The output from photo sensitive region 20Q is supplied to amplifier 31C. The output from photo sensitive region 20T is supplied to amplifier 31D. All the signals amplified by the corresponding amplifiers are supplied to adder 36. The signal from amplifier 31A is supplied to the inverting input terminal of differential amplifier 41 serving as a focusing signal generator. The output from amplifier 31B is supplied to the non-inverting input terminal of differential amplifier 41. The signal from amplifier 31C is supplied to the inverting input terminal of differential amplifier 42 serving as a tracking signal generator. The signal from amplifier 31D is supplied to the non-inverting input terminal of differential amplifier 42.

Differential amplifier 41 as the focusing signal generator compares the sum of the detection signals from photo sensitive regions 20P and 20S with the sum of the detection signals from photo sensitive regions 20R and 20U. A focusing error signal is generated in accordance with the comparison result, and the focusing error signal is fed back to voice coil driver 44. Therefore, a current is supplied to a coil (not shown) for driving objective lens 16 to be perpendicular to the recording surface of optical disk 1 in accordance with the focusing error signal, and objective lens 16 is driven, thereby correcting the focusing error.

Differential amplifier 42 as the tracking signal generator compares the output from photo sensitive region 20Q and the output from photo sensitive region 20T, and an output corresponding to the comparison result, i.e., a tracking error signal is fed back to voice coil driver 45. Voice coil driver 45 supplies a drive current to a coil (not shown) for driving objective lens 16 in accordance with the tracking error detection signal. As a result, objective lens 16 is linearly driven within a plane perpendicular to the optical axis, and the tracking error is corrected.

The output from adder 36 is supplied to signal processor 43. The signal is processed by processor 43 and is then supplied to a control circuit (not shown) as a retrieve signal.

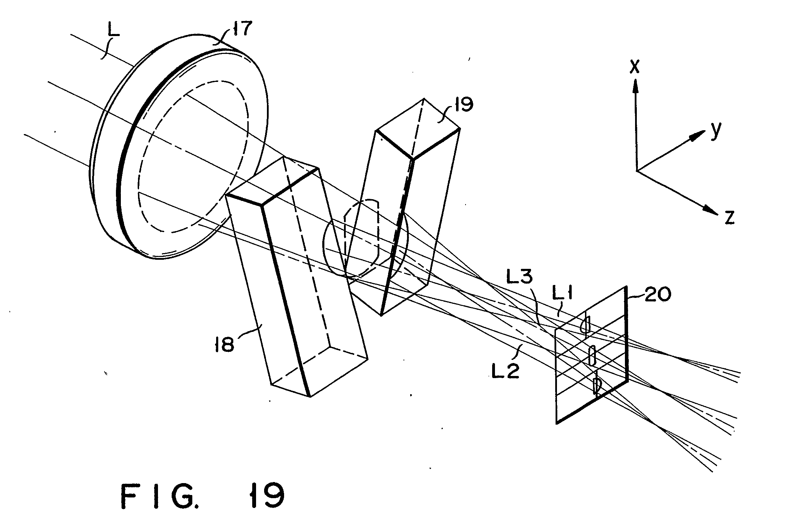

Fig. 19 illustrates the main components of another focusing state detecting apparatus, which is a fifth embodiment of the present invention. This embodiment is identical to the third embodiment shown in Fig. 15, except that third parallel plate 60 has been removed with. As can be understood from Fig. 19, the third light beam L3 passing through the gap between first and second parallel plates 18 is applied straight onto optical detector 20, thus forming a beam spot of substantially the same size and shape as in the third embodiment, though third parallel plate 60 is not used. Hence, the beam L3 is processed in the same way as in the third and fourth embodiments. In the embodiment of Fig. 19, which has no component equivalent to third parallel plate 60, light beam L3 applied between light beams L1 and L2 which have passed through parallel plates 18 and 19, is focused at a position different from the position where beams L1 and L2 are focused. Therefore, a small detector suffices to detect all these beams, L1, L2, and L3 if it is appropriately positioned.

In this embodiment, optical refracting members 60, 28, and 29 all have a parallel plate-like shape and are located at specific positions. However, the shape and position of refracting members 60, 28, and 29 of the present invention can be modified. For example, parallel plate 60 for outputting tracking guide light beam L3 can be replaced by, e.g., a concave or convex lens in order to improve the tracking precision. Each optical refracting member can be replaced by another type of an optical refracting member as long as it has the same effect.

## Claims

1. An optical system for adjusting the focus of a light beam, characterized in that said system comprises:
means (16) for focusing the light beam toward a reflective object (1);
means (18, 19, 28, 29) for splitting the light beam reflected from the object (11) into a first light beam having a first optical axis and a second light beam having a second optical axis substantially parallel to the first optical axis; and
means (20, 41, 44, 8) responsive to the first and second light beams for adjusting the location of the focusing means (16) with respect to the object (1).

2. The system of claim 1, characterized in that the splitting means (18, 19, 28, 29) includes first and second refracting members (18, 19), each included at a different predetermined angle to the optical axis of the reflected light beam.

3. The system of claim 1, characterized in that the splitting means (18, 19, 28, 29) includes first and second birefringent members (28, 29), each having an optic axis different from the optical axis of the light beam.

4. The system of claim 1, characterized in that the adjusting means (20, 41, 44, 8) includes means (20) for detecting the first and second light beams, first transducer means for detecting the first light beam and second transducer means for detecting the second light beam.

5. The system of claim 4, characterized in that the focusing means (16) includes an objective lens (16), and the adjusting means (20, 41, 44, 8) includes focusing signal generator means (41) for generating a focus error signal in response to the first and second transducer means, and driver means (44) for moving the objective lens in response to the focus error signal.

6. An optical system for adjusting the focus of a light beam, comprising:
means (16) for focusing the light beam toward a reflective object;
means (18, 19, 28, 29, 60) for separating the light beam reflected from the object into first, second and third light beams, each having a corresponding optical axis, and each of the optical axes being parallel to each other; and
means (20, 41, 44, 8) responsive to the first, second and third light beams for adjusting the location of the focusing means with respect to the object.

7. The system of claim 6, characterized in that the separating means (18, 19, 28, 29, 60) includes first, second and third refractive members (18, 19), at least two of the refractive members being included at a different predetermined angle to the optical axis of the light beam.

8. The system of claim 6, characterized in that the separating means includes first, second and third refractive members (28, 29, 60), at least two of the refractive members being birefringent (28, 29), and each of the two birefringent members (28, 29) having an optic axis different from the optical axis of the light beam.

FIG. 1

FIG. 2

FIG. 3A

FIG. 3B

# FIG. 4

FIG. 5

FIG. 6

FIG. 7

FIG. 8A

FIG. 8B

FIG. 8C

FIG. 9A

FIG. 9B

FIG. 9C

FIG. 10

FIG. 11A

FIG. 11B

F I G. 12

F I G. 13A     F I G. 13B     F I G. 13C

F I G. 14

FIG. 15

EP 0 316 866 A2

FIG. 16

FIG. 17

F I G. 18

EP 0 316 866 A2

F I G. 19